# DEMANDE DE BREVET EUROPEEN

(11) **EP 0 802 409 A1**
(43) Date de publication de la demande: **22.10.1997**
(21) Numéro de dépôt: 97480013.8
(22) Date de dépôt: 04.04.1997
(51) Int. Cl.: G01N 21/53

(54) **Procédé pour mesurer la diffusion optique par modulation basse fréquence d'une lampe à halogène et diffusiomètre pour la mise en oeuvre de ce procédé**

(30) Priorité: 06.04.1996 FR 9604968
(71) Demandeur: ETABLISSEMENTS DEGREANE S.A., F-83000 Toulon (FR)
(72) Inventeur: Claeyman, Jean-Pierre, F-83100 Toulon (FR); Raymond, Jacques, F-83100 Toulon (FR)
(74) Mandataire: Hammond, William

(57) **Abrégé**

L'invention concerne un procédé pour mesurer la diffusion de la lumière due à des particules liquides dans un gaz ou dans l'air dans lequel on mesure le coefficient d'extinction d'un faisceau d'émission dans un volume ouvert d'analyse formé par l'intersection de ce faisceau d'émission avec un faisceau de détection, caractérisé par le fait que l'on produit le faisceau lumineux (3) en modulant électroniquement à basse fréquence avec des sauts de phase dans la gamme de 10 à 100 Hz ladite lampe halogène (6) et que l'on détecte de manière synchrone de la séquence et de la phase la partie de ce faisceau diffusée dans le faisceau de détection (4).

L'invention concerne également un diffusomètre pour la mise en oeuvre de ce procédé.

## Description

L'invention concerne un procédé pour mesurer la diffusion optique, ainsi qu'un diffusomètre permettant la mise en oeuvre d'un tel procédé.

Les instruments de mesure utilisés pour mesurer la visibilité sont soit des transmissomètres, soit des diffusomètres.

Les transmissomètres déterminent le facteur de transmission de la lumière, ou transmittance, entre un émetteur et un récepteur optique. Les diffusomètres sont basés sur la mesure de l'extinction d'un flux lumineux au sein des particules en suspension dans un volume d'analyse donné.

Un diffusomètre comprend un émetteur de lumière et un récepteur placé en dehors de l'axe de ce dernier. L'intersection du champ couvert par l'émetteur et celui vu par le récepteur définit le volume d'analyse. La précision et la fiabilité des mesures des diffusomètres ont été jusqu'à présent souvent inférieures à celles des transmissomètres. En effet, le diffusomètre, qui ne mesure pas la nature exacte de l'affaiblissement de la visibilité, utilise des relations prédéfinies, donc susceptibles d'imprécisions, entre les coefficients de transmission et d'extinction. De plus, le volume d'analyse d'un diffusomètre est en général beaucoup plus réduit que celui d'un transmissomètre. Mais les diffusomètres présentent l'avantage de leur compacité et de leur facilité d'installation, ainsi que de leurs coûts de fabrication, d'installation et de maintenance, qui sont également largement inférieurs à ceux d'un transmissomètre.

Les diffusomètres actuels utilisent fréquemment comme source lumineuse une diode infrarouge (LED), modulée à fréquence relativement élevée. Ce type d'émetteur présente l'avantage de présenter un coût peu élevé, et de ne pas nécessiter d'alimentation complexe (l'alimentation s'effectue en basse tension). En outre, l'excitation des diodes infrarouges est aisément réalisable, et leur durée de vie est satisfaisante.

Cependant, le problème des diodes infrarouges est tout d'abord que leur spectre d'émission ne correspond pas à celui de l'oeil humain, ce qui entraîne des distorsions de mesure. Ensuite, leur puissance est très limitée, ce qui est gênant pour des appareils destinés à être installés à l'extérieur, dans des zones bien éclairées par le soleil ou d'autres sources parasites.

On a cherché à augmenter la puissance de l'émetteur en remplaçant les diodes infrarouges par une lampe à arc à impulsion, par exemple une lampe au xénon. Les lampes à arc émettent en outre dans le spectre du visible, correspondant à la vision de l'oeil humain.

Cependant, les lampes à arc présentent l'inconvénient d'une durée de vie limitée. Il est donc indispensable de les faire fonctionner selon un mode par impulsions uniquement, ce qui entraîne des difficultés d'échantillonnage et de régularité des mesures. Un autre inconvénient des lampes à arc réside dans la nécessité d'une alimentation haute tension stable, avec les contraintes et les coûts de fabrication correspondants, s'agissant d'appareils qui sont destinés à être installés à l'extérieur et soumis aux intempéries.

Un but de l'invention est de proposer un procédé pour mesurer la diffusion permettant d'échapper aux contraintes techniques et constructives des sources lumineuses actuelles, tout en offrant une précision de mesure supérieure.

Un autre but de l'invention est de résoudre les problèmes posés par la nécessité de réalisation et d'intégration d'une pluralité de mesures pour l'obtention d'une donnée fiable, qualifiée dans un contexte contrôlé.

Encore un autre but de l'invention est de proposer un diffusomètre permettant de mettre en oeuvre le procédé selon l'invention.

A cet effet, le procédé selon l'invention pour mesurer la diffusion de la lumière due à des particules liquides dans un gaz ou dans l'air, dans lequel on mesure le coefficient d'extinction d'un faisceau d'émission dans un volume ouvert d'analyse formé de l'intersection de ce faisceau d'émission avec un faisceau de détection, la source lumineuse étant une lampe halogène, est caractérisé par le fait que l'on produit le faisceau lumineux en modulant électroniquement à basse fréquence avec des sauts de phase dans la gamme de 10 à 100 Hz cette lampe à halogène, et que l'on détecte de manière synchrone de la séquence et de la phase la partie de ce faisceau diffusée dans le faisceau de détection.

On a ainsi constaté de manière surprenante que le choix d'une lampe halogène et son fonctionnement en mode modulé électroniquement à basse fréquence avec des sauts de phase permettaient de résoudre de façon satisfaisante l'ensemble des problèmes observés dans les réalisations de l'art antérieur et qui ont été mentionnés plus haut.

L'invention concerne également un diffusomètre, comprenant comme source lumineuse une lampe halogène définissant un faisceau d'émission et un récepteur, placé hors du champ de celle -ci, définissant un faisceau de réception, l'intersection des faisceaux d'émission et de réception définissant un volume ouvert d'analyse, ainsi qu'une électronique de contrôle, caractérisé par le fait que la lampe halogène est modulée électroniquement à basse fréquence, dans la gamme de 10 à 100 Hz, avec des sauts de phase.

De préférence, les points de fonctionnement de la détection, de la mesure et la démodulation synchrone sont contrôlés par l'électronique.

De préférence, la modulation s'effectue dans la gamme de 15 à 80 Hz.

Avantageusement, la modulation s'effectue avec utilisation d'une suite d'ordre quatre ou plus pour générer les sauts de phase.

La lampe halogène peut être associée à une optique d'émission définissant le faisceau d'émission.

Le récepteur peut être une photodiode, associée à une optique de réception définissant le faisceau de réception et un ensemble de filtres optiques.

Selon un mode de réalisation, le faisceau d'émission est généré selon une ouverture angulaire d'environ 12°, le faisceau de réception est reçu selon une ouverture angulaire de 22°, l'angle entre les faisceau étant d'environ 35°, et la distance entre l'émetteur et le récepteur étant d'environ 1,22 m.

On comprendra mieux l'invention à la lecture de la description d'un exemple de réalisation, effectuée en référence aux dessins parmi lesquels :
- la figure 1 est une vue en plan schématique d'une partie optique d'un diffusomètre selon l'invention ;
- la figure 2 est un schéma par blocs d'une partie électronique du diffusomètre selon l'invention.

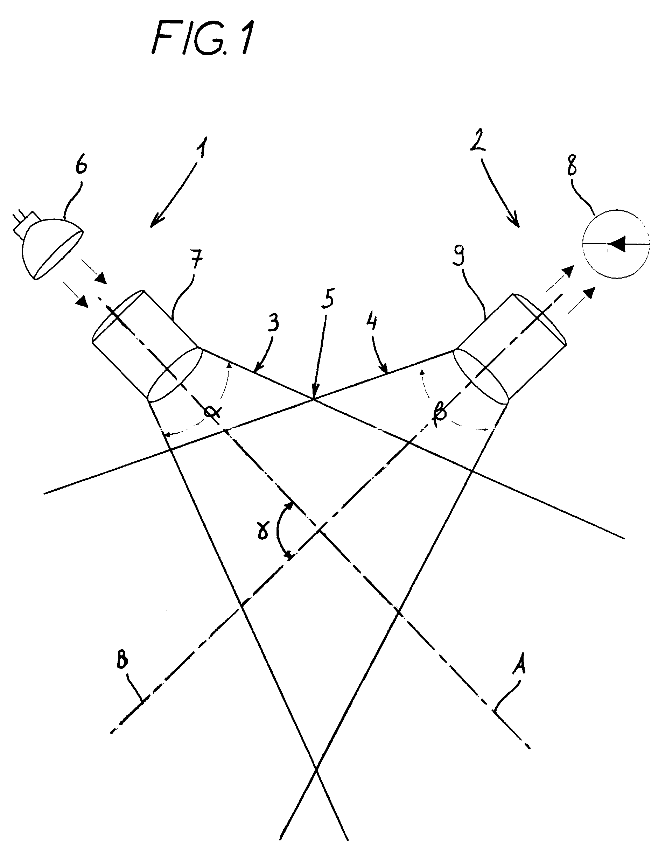

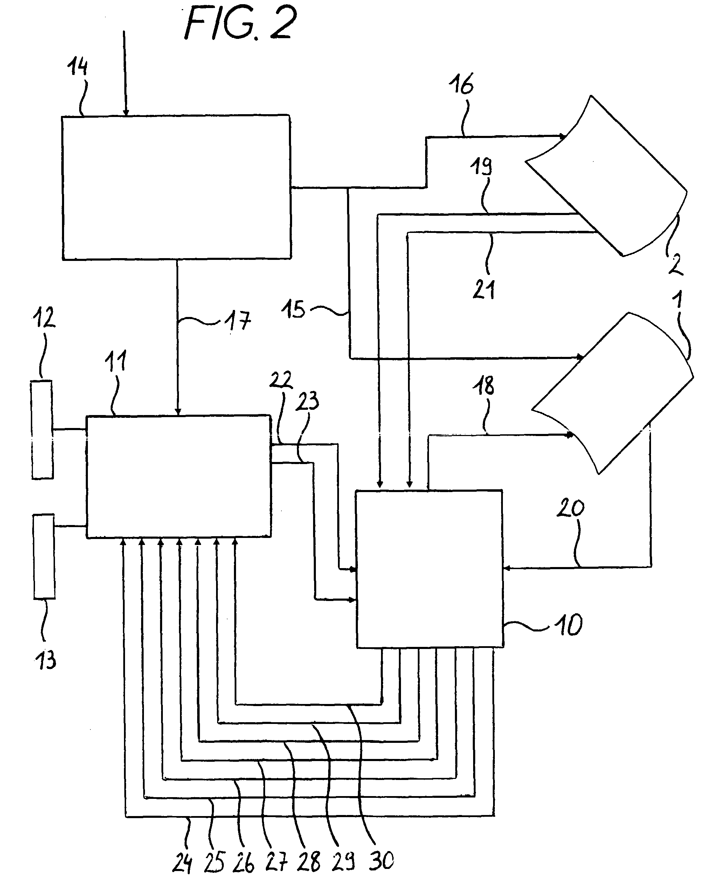

Le diffusomètre représenté schématiquement sur les figures comprend une partie optique et une partie électronique, qui sont représentées sur les figures 1 et 2 respectivement.

La partie optique, qui est représentée schématiquement sur la figure 1, comprend un émetteur désigné dans son ensemble par la référence 1 et un récepteur désigné dans son ensemble par la référence 2, définissant chacun un faisceau respectivement d'émission 3 et de réception 4.

Le récepteur 2 est placé hors du faisceau d'émission 3 de l'émetteur 1, de façon à ne détecter qu'une partie diffusée du faisceau émetteur 3. L'intersection des faisceaux émetteur 3 et récepteur 4 définissent un volume ouvert d'analyse 5.

L'émetteur 1 est constitué par une lampe à halogène 6 associée à une optique d'émission 7 qui est ici un réflecteur dichroïque fermé, définissant pour le faisceau émetteur 3 une ouverture angulaire alpha de 12°. On appelle A l'axe du faisceau d'émission.

L'avantage de la lampe à halogène 6 est d'émettre dans le domaine du visible, ce qui correspond au spectre de l'oeil humain. La modulation permet, d'une part, de rejeter de la mesure les phénomènes parasites (soleil, lumière artificielle), et d'autre part, d'augmenter la durée de vie de la lampe. En outre, le coût de ce type de lampe est relativement peu élevé. Ces lampes ne nécessitent pas d'alimentation haute tension, et leur rendement énergétique est meilleur que celui des LED. La modulation à basse fréquence permet d'augmenter encore la durée de vie de la lampe sans rendre la prise de mesures aléatoire ou peu exacte.

Le récepteur 2 est constitué par une photodiode 8 associée à une optique de réception 9 qui est ici une optique monoélément, définissant pour le faisceau de réception 4 une ouverture angulaire béta de 22°, et un ensemble de filtres optiques permettant d'optimiser la sensibilité de la mesure. On appelle B l'axe du faisceau de réception 4.

L'émetteur 1 et le récepteur 2 sont disposés à une distance D de 1,22 m, et l'angle gamma entre les faisceaux d'émission et de réception est de 35°. On a constaté expérimentalement que cette disposition offre les résultats de mesure les plus satisfaisants.

La lampe halogène 6 émet naturellement une lumière dont le spectre est proche de la réponse photopique de l'oeil humain. Cette correspondance est encore améliorée par la présence des filtres au niveau de l'optique de réception, qui affinent un compromis optimal entre la réponse de l'oeil, le spectre du récepteur et celui de l'émetteur, de façon à obtenir des valeurs de mesures de diffusion élevées dans les longueurs d'ondes voulues. Par exemple, on pourra prévoir des filtres pour les rayonnements infrarouges et ultra-violets.

La partie électronique du diffusomètre, qui est représentée schématiquement sur la figure 2, comprend principalement une unité de mesure 10 commandant le fonctionnement de l'émetteur 1 et du récepteur 2, et une unité de contrôle et de traitement des mesures 11 associée à un afficheur 12 et à un clavier 13. L'émetteur 1. le récepteur 2 et l'unité 11 sont alimentés à partir d'un module d'alimentation 14 (connexions désignées respectivement par 15, 16, 17).

L'unité de mesure 10 assure la modulation de l'émetteur 1 (connexion 18) et la mesure synchrone contrôlée du flux reçu par le récepteur 2 (connexion 19), ainsi que l'amplification et la commutation de gain. L'unité de mesure 10 assure également le contrôle de la lumière émise par l'émetteur (connexion 20) et la température du récepteur 2 (connexion 21). Ces fonctions sont réalisées par des moyens électroniques connus de l'homme de l'art.

L'unité de contrôle et de traitement 11 définit la modulation de fonctionnement et le gain en direction de l'unité de mesure 10 (connexions respectivement 22 et 23), et assure le traitement des signaux de mesure provenant de l'unité de mesure 10 : tension de la lampe, tensions analogiques, intensité lumineuse émise, températures, intensité lumineuse diffusée en avant, en arrière, luminance de fond (connexions 24 à 30).

Le traitement du signal consiste en une intégration du rapport entre l'intensité lumineuse émise et celle diffusée dans le volume de mesure sur une période donnée, c'est-à-dire sur un nombre de mesures données, de façon à réaliser une moyenne, le cas échéant en éliminant certaines mesures qui se situent en dehors d'un consensus de qualité pré-défini.

Le traitement du signal peut prendre en compte d'autres mesures, comme la tension de la lampe 6, l'intensité émise, la luminance, le flux de réception par diffusion arrière et/ou avant, la température de l'émetteur 1 et/ou du récepteur 2, etc. La prise en compte d'un ou plusieurs de ces paramètres permet de changer le point de fonctionnement de l'émetteur, du récepteur, de contrôler la démodulation et d'affiner le traitement de la mesure, afin d'éliminer le plus possible les distorsions et les écarts.

A cet effet, l'unité de contrôle et de traitement 11 comprend un microprocesseur doté de moyens de calculs appropriés, ainsi qu'une mémoire. Le type de microprocesseur, le nombre et la capacité des mémoires, les circuits électroniques sont définis en fonction des performances désirées parmi les matériels électroniques connus de l'homme de l'art.

Dans l'exemple considéré, la modulation de l'émetteur 1 s'effectue à une fréquence comprise entre 15 et 80 Hz, avec l'utilisation d'une suite idéale d'ordre quatre ou plus pour générer les sauts de phase. L'acquisition a lieu en moyenne toutes les 500 ms sur plusieurs échantillons. Le traitement comprend une intégration sur 128 mesures au minimum, ces mesures correspondant aux échantillons qui répondent aux critères du consensus de qualité.

L'afficheur 12 est un écran à cristaux liquides susceptible d'afficher les données après traitement ainsi que des informations de maintenance. Les informations affichées sont la mesure de diffusion, ou la valeur calculée de visibilité ou Portée Optique Météorologique (POM). Le clavier 13 permet le changement de mode de fonctionnement entre contrôle et exploitation.

L'émetteur 1 et le détecteur 2 sont montés sur une structure démontable rigide, par exemple en aluminium, qui est fixée sur le sol. La partie électronique est disposée dans un coffret rapporté sur cette structure.

Le procédé de mesure au moyen du diffusomètre décrit ci-dessous comprend les étapes suivantes :
- On module à basse fréquence avec des sauts de phase l'émetteur 1 constitué principalement par la lampe à halogène 6;
- On mesure de manière synchrone de la séquence et de la phase le flux reçu par le récepteur 2 ;
- On intègre une pluralité de mesures successives, de façon à obtenir une moyenne, éliminant le cas échéant des mesures trop écartées;
- On affiche le résultat de mesure après traitement, et/ou on le transmet vers des utilisateurs distants.

La modulation de l'émetteur 1 est constante. En variante, on peut la faire varier en vue d'obtenir des valeurs brutes de mesure plus élevées, la mesure de réception étant relevée de manière synchrone.

## Revendications

1. Procédé pour mesurer la diffusion de la lumière due à des particules liquides dans un gaz ou dans l'air, dans lequel on mesure le coefficient d'extinction d'un faisceau d'émission dans un volume ouvert d'analyse formé par l'intersection de ce faisceau d'émission avec un faisceau de détection, caractérisé par le fait que l'on produit le faisceau lumineux (3) en modulant électroniquement à basse fréquence avec des sauts de phase dans la gamme de 10 à 100 Hz ladite lampe halogène (6) et que l'on détecte de manière synchrone de la séquence et de la phase la partie de ce faisceau diffusée dans le faisceau de détection (4).

2. Diffusomètre pour la mesure de diffusion de lumière dans un gaz ou dans l'air, destiné à la mise en oeuvre du procédé selon la revendication 1, comprenant comme source lumineuse (1) une lampe halogène (6) définissant un faisceau d'émission (3) et un récepteur (2) placé hors du champ de celle-ci, définissant un faisceau de réception (4), l'intersection des faisceaux d'émission (3) et de réception (4) définissant un volume ouvert d'analyse (5), ainsi qu'une électronique de contrôle, caractérisé par le fait que la lampe halogène (6) est modulée électroniquement à basse fréquence, dans la gamme de 10 à 100 Hz avec saut de phase.

3. Diffusomètre selon la revendication 2, caractérisé par le fait que la modulation, les points de fonctionnement de la détection, la mesure et la démodulation synchrone sont contrôlés par l'électronique.

4. Diffusomètre selon l'une des revendications 2 ou 3, caractérisé par le fait que la modulation s'effectue dans la gamme de 15 à 80 Hz.

5. Diffusomètre selon la revendication 4, caractérisé par le fait que la modulation s'effectue avec utilisation d'une suite idéale d'ordre 4 ou plus pour générer les sauts de phase.

6. Diffusomètre selon l'une quelconque des revendications 2 à 5, caractérisé par le fait que la lampe halogène (6) est associée à une optique d'émission (7) définissant le faisceau d'émission.

7. Diffusomètre selon l'une quelconque des revendications 2 à 6, caractérisé par le fait que le récepteur (2) est une photodiode (8) associée à une optique de réception (9) définissant le faisceau de réception (4) et un ensemble de filtres optiques.

8. Diffusomètre selon l'une quelconque des revendications 2 à 7, caractérisé par le fait que le faisceau d'émission est généré selon une ouverture angulaire d'environ 12°, le faisceau de réception est reçu selon une ouverture angulaire de 22°, l'angle entre les faisceau étant d'environ 35°, et la distance entre l'émetteur et le récepteur étant d'environ 1,22 m.
